# EUROPEAN PATENT APPLICATION

(11) **EP 1 313 005 A2**
(43) Date of publication of application: **21.05.2003**
(21) Application number: 02008202.0
(22) Date of filing: 17.04.2002
(51) Int. Cl.: G06F 3/16, G06F 1/26

(54) **Computer system, computer and core computer**

(30) Priority: 14.11.2001 US 4064
(71) Applicant: Xybernaut Corporation, Fairfax, Virginia 22033 (US)
(72) Inventor: Newman, Edward G., Virginia 22039 (US); Jenkins, Michael D., Virginia 22015 (US); Toyosato, Kazuyuki, Yokohama-shi, Kanagawa-ken (JP)
(74) Representative: Borchert, Uwe Rudolf, Dipl.-Ing.

(57) **Abstract**

This invention relates to control of the power and heat generated by a computer by the use of verbal commands. These verbal commands are converted into electrical signals by the CPU and are transmitted to all of the other components in the computer system.

## Description

The present invention relates to a computer system according to the features of claim 1, a computer according to the features of claim 3 and a core computer according to the features of claim 13. Especially, the invention relates to computers and, more specifically, to a system for power management of a computer by verbal commands. This application is a Continuation-In-Part of U.S. Application Serial No. 09/461,870 which in turn was a Continuation-In-Part of U.S. Application Serial No. 09/160,849, now U.S. Patent 6,301,593 issued July 17, 2001.

In U.S. Patents 5,999,952 and 6,029,183, a core computer unit is disclosed. The core unit has all of the components of a general purpose computer except for a display and a source of power. This core unit has a sealed housing that contains all of the computer components so that the components cannot be tampered with, removed or replaced. This core unit is dormant and non-functional until it is positioned in contact with a compatible enclosure. The disclosures of U.S. Patents 5,999,952 and 6,029,183 are incorporated by reference in the present disclosure. By "core" or "core unit" or "core computer" is meant throughout this disclosure and claims the core or core computer defined in U.S. Patents 5,999,952 and 6,029,183.

Other known computers exist such as desktop computers, laptop computers, mobile computers and wearable or user-supported computers. All of these are included in the term "computer" as used throughout this disclosure and claims. All of these computers are known commercially-used computers including body-worn computers disclosed in U.S. Patents 5,305,244 and 5,844,824, the disclosures of which are also incorporated by reference into the present disclosure. Many handicapped computer users are limited in what they can do without their hands when operating a computer.

The computing apparatus described in 5,305,244 includes a housing having means for removably supporting the housing onto a user for support by the user. The housing further includes storage means for storing previously entered information, and processor means, communicating with the storage means, for receiving, retrieving and processing information and user commands in accordance with a stored program. The computing apparatus also includes audio transducer and converter means in communication with the processor means for receiving audio commands from the user, for converting the received audio commands into electrical signals, for recognizing the converted electrical signals and for sending the recognized electrical signals to the processor means, the audio transducer and converter means also being supported by the user. The computing apparatus further includes display means in communication with the processor means for receiving information from the processor means and for displaying the received information for the user, the display means being supported by the user whereby the user may operate the computing apparatus to display information in a hands-free manner utilizing only audio commands.

In the above noted U.S. Patent 5,844,824, a hands-free portable computer system similar to that in U.S. Patent 5,305,244 is described; however, various activation means other than voice activation are disclosed. The invention disclosed in U.S. Patent 5,844,824 is directed to a compact, portable computing apparatus at least part of which is completely supported by a user for hands-free retrieval and display of information for the user. The computing apparatus includes a housing which may or may not have securing means for removably securing the housing to a user for support by the user. Alternatively, the housing may be located in a remote location not attached to the user and apart from the other components. The housing further includes storage means for storing previously entered information, and processor means, communicating with the storage means, for receiving, retrieving, and processing information and user commands in accordance with a stored program. Since large databases of ETMs and IETMs will be accessed by the mobile self-contained computing apparatus, a means of easily interfacing storage means containing the databases is required. The housing of the computing apparatus includes an access port whereby various storage means containing data can be interfaced and communication established. Access and transfer of data between the storage means and the computing apparatus can be accomplished entirely under control of various hands-free activation means described in this application. The access port allows direct electrical attachment of the storage means; however, other wired and wireless connections are also used. The computing apparatus also includes eye tracking, brain actuation means, transducer and converter means with or without audio transducer and converter means in communication with the processor means, for receiving commands from the user, for converting the received commands into electrical signals, for recognizing the converted electrical signals and for sending the recognized electrical signals to the processor means. The transducer and converter means may or may not be supported by the user. The computing apparatus further includes display means in communication with the processor means for receiving information from the processor means and for displaying the received information for the user, the display means being supported by the user whereby the user may operate the computing apparatus to display information in a hands-free manner utilizing only brain activation or eye tracking with or without audio commands.

In addition to the voice activation means used in U.S. Patent 5,305,244 as noted earlier, two other above-noted activation means have been contemplated by the present invention in U.S. Patent 5,844,824, i.e. eye tracking and brain-activation means (EEG). This invention includes the same general system described in U.S. Patents 5,305,244 and 5,844,824. As noted earlier, any other suitable computer is included herein.

In U.S.Patent 6,262,889 a body-worn mobile computer is disclosed which comprises a computer housing having a heat insulating surface which fits adjacent a user's body and heat conducting top and side surfaces which dissipate heat from the internal portion of the housing to the atmosphere. This is to remedy a problem uniquely faced by mobile and body-worn computers; that is, heat generated by the CPU and conducted to the housing could cause a major problem to users and wearers. The problems faced with body-supported computers are completely different from those of desktop or laptop computers but all computers need heat control. Attempts to remedy this heat problem in user-supported and laptop computers have led to highly insulating components or housings but these efforts have resulted in larger and heavier computers, a situation just opposite to the desired goal of smaller and lighter body-worn units. U.S. Patent 6,262,889 also uses heat sinks together with selected materials to alleviate the heat problems in body-worn computers. Other references that deal with heat problems in computers included in this invention are U.S. Patents 5,559,675, 5,287,292, 5,452,434 and 4,980,836. All of these prior art patents disclose manual ways for reducing power and heat to desktops, laptops or other mobile computers by the user of mice or keyboards. As noted earlier, the problems in desktop computers and their solutions do not equate to problems in mobile computers. While the problems in desktop computers are different from laptops and wearable computers, all computers need heat and power control. Disabled persons who do not have use of their hands in using any computer need some hands-free way to control power and heat. None of the prior art patents noted above teach how computers can be powered down to reduce heat and power without the use of hands.

In U.S. Patent 5,606,341 a laptop computer having CPU cooling means is disclosed. In this laptop computer, CPU-generated heat is thermally conducted passively to a radiator-like element disposed behind the LCD which uses the heat to warm the LCD. The CPU is surrounded by a liquid-tight housing containing a bi-phase coolant. A first tube in fluid communication with an outlet port in the housing conveys heat-vaporized coolant to an input port on the radiator. The coolant flows through a plurality of columns formed in the radiator-like element, transferring heat and condensing in the process. The transferred heat is radiated to the LCD which is desirably warmed in the process. The condensed coolant is conducted from an export port in the radiator-like element through a second tube to an input port in the housing. A pressure sensor may be included to provide a coolant pressure drop signal that can be used to shutdown the CPU in the event of a coolant leak.

In U.S. Patent 5,606,341 a heat-dissipating coolant is deposited or disposed adjacent a rear surface of the LCD. Then the CPU is surrounded with a coolant-containing chamber whereby heat generated by the CPU is carried by a conductor to a coolant. U.S. Patent 5,606,341 uses a radiator-type system to maintain the temperature at a workable level and to control the heat generated by the CPU. Obviously, the weight of the radiator and the use of chemical coolants make the system of U.S. Patent 5,606,341 undesirable for use in body-worn computers.

None of the Japanese laid-Open Publications HEI 09-114543, HEI 07-016388, HEI 05-022779, HEI 04-138512, HEI 07-134628, HEI 08-211961 and HEI 08-115142 teach the use of verbal commands to control the power and the heat generated in a general purpose computer as in the present invention.

In laptop or mobile environments, battery life is one of the more important features to users. Power management is implemented in a variety of ways but the most common is done through either overt (manual or physical) changes to the system or covert (through the modification of BIOS or operating system settings) or a combination of both. In situations where the laptop is powered down through overt actions - when the user closes the laptop lid or screen - the system will interpret this as an indication that the user is, for the time being, completing any work and will not be using the laptop to perform any other functions. When this occurs, the system will, without any other intervention on the part of the user, place the laptop in a powered-down or sleep state. When a computer is in this state, the laptop will have reduced the power or eliminated it completely from all non-critical components. Those components include monitor, floppy. CD-ROM, hard drive, etc. For convenience, laptop computer manufacturers have implemented a simple button that a user can hit to immediately place the computer in a sleep or suspend mode. To "wake up" or reactivate a computer in sleep or suspend mode, all that the user needs to do is move the mouse or press a key on the keyboard. Another way to reduce battery consumption or place the laptop in sleep or suspend mode is to "program" the operating software to monitor the use of the computer and to place the computer in sleep or suspend mode when certain conditions are met. These conditions are: no activity on the computer for a certain amount of time (settable by the user), inactivity of a certain (programmable) duration will cause the hard disk to power down, inactivity of the video display for a certain duration will cause the back light and video display to go blank, etc. These situations are caused by the operating system but allows the user to program when and under what circumstances the peripherals power down. Again, to reactivate a certain peripheral, all the user has to do is to cause the computer to request an operation by that peripheral (e.g. a task that requires an application to access the hard drive will cause the hard drive to reactivate itself).

In all of the above-mentioned situations, the user is required to provide an overt manual action in order for the system to become fully operational. This usually takes the form of hitting a keystroke or moving the mouse. For users without use of their hands, manual control is not possible. As earlier noted, there is no prior art known that suggests a voice command-power control system for use in any computer.

While there is a real need for hands-free control of power in any computer, there is also a corresponding need to use verbal commands to control heat in any computer system. Today, many handicapped people must use computers to keep up with and keep compatible with to-day's requirements. Handicapped people with no use of their hands such as quadriplegics need non-manual methods of controlling computers including the control of power and heat in the computer system. This invention provides ways for the handicapped to use a computer to its fullest by the use of verbal commands.

It is, therefore, an object of this invention to provide a practical heat and power control system for use in computers devoid of the above-noted disadvantages.

Another object of this invention is to provide a hands-free method for controlling power in a computer system including powering down a computer.

A further object of this invention is to provide a method for controlling the power or heat in a computer system.

Yet a further object of this invention is to provide a hands-free method for reducing the heat generated by the CPU of a computer.

Still a further object of this invention is to provide a simple, practical and efficient method for handicapped people to control the heat and power generation of a computer.

Another yet further object of this invention is to provide an audio means for controlling heat and power in a computer and reduce the heat in mobile computers that may be in contact with a user's body.

These and other objects of this invention are accomplished generally speaking by use in any computer of a voice recognition module which controls the power and heat in the computer.

The computer further includes audio transducer and converter means in communication with the system unit for receiving audio commands from the user, for converting the receiver audio commands into electrical signals and for sending the recognized electrical signals to a processor within the system unit. In the present embodiment, the audio transducer and converter means includes a microphone for receiving verbal commands from the operator. The microphone which in the present embodiment is electrically connected to the system unit is preferably an ear-supported microphone although those with ordinary skill in the art will appreciate that any audio-input or transducer device could be used and that the audio input or transducer could be supported by the user at some other location such as proximate the mouth or throat of the user. The audio system can be hard wired or wireless.

For example, an application program could interact with an independent (or dependent) voice-recognition module in order to cause the voice-recognition module to recognize a verbal utterance against a subset of an entire trained vocabulary model. The vocabulary subset could include, for example, the words in the speech recognition module that correspond to the operating system commands to power down the CPU. The heat/power can be controlled by key words in the vocabulary subset. In contrast, dependent voice-recognition modules cannot be integrated with application programs. Systems and methods for voice recognition and, particularly for independent voice recognition, are described in U.S. Patent Nos. 5,025,471, 4,969,193 and 4,672,667, all of which are herein incorporated by reference in their entireties.

When the computer is not operational, the computer should be powered down to conserve the limited power of the battery in mobile computers. Since the computer of this invention has hands-free control, there is no mouse or keyboard required to power down. Also, no mobile computer known has any practical means to conserve the battery power and lower the heat that may be conveyed to the body of a user. It is extremely important in mobile computers (laptops and wearables) to (a) conserve energy because of the limited power provided by the battery; and (b) to lower the heat generated by the computer since the computer may be in contact with the body of a user.

A computer system is comprised of a CPU (central processing unit), a chip set (IC for controlling the system), an audio process IC, a video output control IC and the like. Here, the audio process IC processes such that audio data composed and processed in digital manner is converted in analog format and creates from the converted data sound that can be listened to with the human ear. Also, the audio process converts analog sound generated externally into digital signals and processes it such that it becomes in a processable state at the CPU.

The chip set arbitrates the CPU and functional IC such as audio process IC and video output control IC while it controls the operation speed of CPU from the viewpoint of decreasing electric power consumed and controlling temperature increase at CPU.

For the decrease of electric power consumed, when there are no inputs from external input devices such as keyboard and mouse, the operation speed of the CPU is described and the electric power consumed is minimized. Once there are inputs from any external input devices, the operation speed of the CPU is increased to perform processes quickly.

For controlling the temperature increase at the CPU when the temperature at the CPU and its surroundings increases, the operation speed of the CPU is decreased to control the generation of heat from the CPU.

Normally, because audio inputs are not considered as an external input device like keyboard or mouse, there are effects to the control of the operation speed of the CPU. That is, when audio is input externally and the CPU tries to process it, the operation speed of the CPU is very low. Thus, when processes are not performed efficiently enough, the operation speed of the CPU cannot be increased.

Thus, in addition to a path for audio input, a circuit for detecting the existence of the audio input is provided. Then by processing the output from the circuit at a chip set and controlling the operation speed of the CPU with the processed data, processing the audio data by CPU is performed smoothly.

In all of the computers of this invention, a determination is made at a comparator as to whether the analog audio input is more than a predetermined level. Here, the predetermined level is set by components on the circuit such as resistance. The result of the determination is carried to the chip set as interrupt signals. Then, the operation speed of the CPU is varied by the point of change in the interrupt signals as a trigger.

Since processing the audio data is not necessary when the output from the comparator is none, the control of the operation speed of the CPU is performed with external input devices and the temperature at the CPU. On the other hand, when there is output from the comparator, the operation speed of the CPU is maximized regardless of other causes. Furthermore, it is possible to most prioritize the process of the audio data if the CPU is processing multiple tasks in parallel.

Additional advantages and characteristics result from the following description of several embodiments of the invention in connection with the drawings. In the drawings are shown:

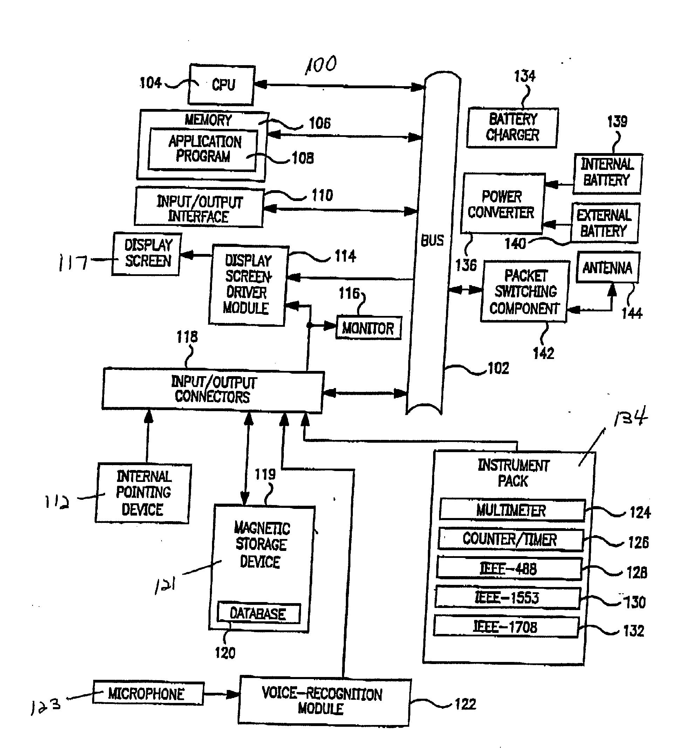

- Fig. 1: a schematic block diagram of the primary structural features of the computer.

Fig. 1 shows a schematic block diagram of the primary structural features of the computer in accordance with the present embodiment. The computer 100 includes a bus 102 which preferably has a data width of at least sixteen bits. According to the present embodiment, the bus 102 is contained in the system unit 106. The computer 100 also includes processor means such as central processing unit (CPU) 104, which is connected to the bus 102 and is also preferably contained in the system unit. Preferably, the CPU 104 is an 80286 or 80386SX microprocessor available from Intel. It will be appreciated by those of ordinary skill in the art that while an 80286 or 80386SX microprocessor is preferred any other suitable central processor or microprocessor, either available presently or in the future, could be used.

The computer 100 also includes a memory 106 having, for example, one Mbyte to twenty Mbytes of random access memory (RAM); however, any amount of RAM is suitable. The memory 106 which is also connected to the bus 102 and is preferably contained in the system unit, stores an application program 108 while the computer is operating. The application program 108 may have been loaded into the memory 106 from a magnetic storage device 119 (described below) pursuant to operator instructions.

The computer 100 also includes an input/output interface 110 which controls all data transfers between the CPU 104 and certain other components (herein called peripherals) which communicate with the CPU 104 but which are not connected directly to the bus 102. Preferably, the input/output interface 110 includes a video interface, a controller for at least two RS-232 compatible serial ports, a controller for the centronics-compatible parallel port, optional keyboard and mouse controllers, a floppy disk controller and a hard drive interface. However, it will be appreciated by those of ordinary skill in the art that the input/output interface 110 could include additional and/or different interfaces and controllers for use with other types of peripherals. The input/output interface 110 is connected to the bus 102 and preferably is located in the system unit.

Referring again to Fig. 1, the computer 100 also includes various peripherals such as storing means, such as a magnetic storage device 119, measurement means such as instrument pack, a microphone and a voice-recognition module 122 that are all connected to the system unit (and, specifically, to the input/output interface 110 which controls data traffic between the peripherals and the CPU 104) via the input/output connectors 118. The voice recognition module 122 will contain means to recognize a voice command to power down.

The voice-recognition module 122 is preferably contained in the system unit and is connected to the microphone (which is an ear microphone located in or outside of the system unit). Alternatively, the voice-recognition module 122 may be located outside of the system unit and, for example, may be incorporated with the microphone as a single unit. Alternatively, the analog-to-digital converter component of the voice-recognition module 122 is located outside of the system unit while the remaining components of the voice-recognition module 122 is located inside the system unit, the external analog-to-digital converter preferably communicating with the system unit via a serial communication stream. The microphone receives audio input (also called verbal utterances) from the operator, converts the audio input to electrical signals and digitizes the electrical signals. The voice-recognition module 122 recognizes the verbal utterances (which are in the form of digitized electrical signals) and transfers the recognized verbal utterances to the CPU 104 for processing according to the application program 108. Thus, a voice command to control power including power down will reduce or control power and heat when desirable. Thus, just as a conventional keyboard driver interprets as characters and words the electrical signals which result from an operator typing on a conventional keyboard, the voice-recognition module 122 interprets (or recognizes) as characters and words the digitized electrical signals which result from an operator speaking near or into the microphone. Consequently, like conventional input devices such as keyboards and pointing devices, the voice-recognition module 122 in combination with the microphone provides a means for operators to interact with and control the operation of the computer 100.

Preferably, the voice-recognition module 122 operates according to well-known dependent voice recognition algorithms and is implemented in hardware of a type well known in the art. According to a preferred embodiment, the voice-recognition module 122 is a dependent voice recognition circuit card available from Voice Connection of Irving, California, USA. However, those with ordinary skill in the art will appreciate that any dependent voice recognition circuit card having a size compatible with the size of the system unit 106 could be used. Element or component 114 is the graphics chip that drives the displays 116 and 117. These displays display information from the processor or chip 114. There is also in the system of this invention elements: 112 is an internal pointing device; 120 is the database for storing information; 121 is the non-volatile storage device; 123 is a microphone; 124 to 132 are all interfaces for test equipment or test equipment interfaces; 134 is a battery charger that charges batteries both internal battery 139 and external battery 140; 136 is a power converter that takes power input and converts it to a specific voltage to run the computer system; 142 is a packet switching component or communication means such as a cell phone, radio and the like; 144 is an antenna for communication device 142 for receiving signals from a transmitter.

Alternatively, the voice-recognition module 122 operates according to well-known independent voice recognition algorithms, the independent voice-recognition algorithms representing an improvement over dependent voice recognition algorithms. Specifically, an independent voice-recognition module is able to recognize the voices of multiple speakers and includes "good listener", a learning feature for real time modification of a trained vocabulary model. In contrast, a dependent voice-recognition module can recognize only a single speaker's voice.

The core computer included in this invention is specifically disclosed in U.S. Patents 5,999,952 and 6,029,183. The core computer comprises a completely enclosed housing, all general purpose computer components are in said housing. The core computer by itself is non-functional as a computer until it is connected to an enclosure and source of power. By "enclosure" is meant a receiving structure to which the core is connected to or partially housed by when operational. By "communication means" is meant cellular telephones, hard-wire telephones, radio transceivers, infrared, laser, fiber optics and other suitable communication means. Communication means may be used with any of the computers disclosed herein.

There is software available today such as IBM's VIA VOICE that provides voice input to computer but VIA VOICE cannot control monitors or displays and other computer components as does the present invention. VIA VOICE is a software based speech engine that allows a user to interface with the operating system and some programs to effect commands that could otherwise be effected using a keyboard and/or mouse. The program is not any faster than using a mouse because the same sequence of commands must be made to effect something. The only difference is that a user can use his voice instead of a mouse or keyboard. Because VIA VOICE is software based, it must run on the CPU. The audio interrupt system of the present invention allows a user to use voice to control the power in a computer system including to power down the CPU and also to control power to the CPU in response to temperature, a desire to save power or other reason. It is hardware based and does not require any other software based speech engine. In the present invention, a user simply utters a verbal command to shut down or power down (sleep mode) the computer and the actual command itself is sent directly to the CPU without going through the software. This causes the CPU to power down or to shut off power to various devices effecting a sleep mode.

The preferred and optimally preferred embodiments of the present invention have been described herein and shown in the accompanying drawings to illustrate the underlying principles of the invention but it is to be understood that numerous modifications and ramifications may be made without departing from the spirit and scope of this invention.

### List of Reference Signs

- 100: computer
- 102: bus
- 104: central processing unit (CPU)
- 106: system unit / memory
- 108: application program
- 110: input/output interface
- 112: internal pointing device
- 114: graphics chip
- 116: display
- 117: display
- 118: input/output connectors
- 119: storage device
- 120: database for storing information
- 121: non-volatile storage device
- 122: voice recognition module
- 123: microphone
- 124: interface
- 126: interface
- 128: interface
- 130: interface
- 132: interface
- 134: battery charger
- 136: power converter
- 139: internal battery
- 140: external battery
- 142: packet switching component
- 144: antenna

## Claims

1. A computer system comprising a housing, power means, storage means, processor means, audio transducer and converter means, and a display means, said processor means containing an audio recognizing means, said audio transducer and converter means in communication with said processor means for receiving audio commands from a user, said audio transducer and converter having means for converting audio commands into electrical signals to control power in the system and having means to send said electrical signals to the processor and other components of said computer to comply with said audio commands, said display means selected from the group consisting of desktop monitors, head-mounted displays, flat panel displays, wrist-mounted displays, neck-hung displays, displays supported by lanyards attached to user's body and mixtures thereof.

2. The computer system according to claim 1, **characterized in that** said housing has communication means for use in said system.

3. A computer comprising communication means, a computer housing, power means, display means, storage means, processor means, audio transducer and converter means, and recognizing means, said housing containing internally all components of said computer except for said display means, said processor in communication with said audio transducer and converter means and wherein said processor having means to accept audio commands and convert said audio commands into electrical signals to control and effect power through said computer, said audio transducer having means to send said converted audio commands to said processor and other components of said computer, said computer selected from the group consisting of desktop computers, laptop computers, mobile computers and user-supported computers.

4. The computer system and computer respectively according to any of the preceding claims, **characterized in that** said processor means is in communication with said storage means for receiving, retrieving and processing information and user commands in accordance with a stored program.

5. The computer system and computer respectively according to any of the preceding claims, **characterized in that** said housing is a user-supported housing having securing means for being supported and carried hands-free by the user.

6. The computer system and computer respectively according to any of the preceding claims, **characterized in that** said storage means has means for storing previously entered information including an electronic technical manual and a preprogrammed vocabulary model of a plurality of words, including preprogrammed commands to reduce power supplied to said processor means.

7. The computer system and computer respectively according to any one of the preceding claims, **characterized in that** said computer display means is in communication with said processor means for receiving the outputted information from the processor means and for displaying any power change or reduction effectuated by the commands of the user.

8. The computer system and computer respectively according to any one of the preceding claims, **characterized in that** said recognizing means contains a plurality of words and phrases in a preprogrammed vocabulary model including a preprogrammed vocabulary to incrementally control power to said processor means, and for matching the converted electric signals against said preprogrammed vocabulary to recognize the command.

9. The computer system and computer respectively according to any one of the preceding claims, **characterized in that** said power means supplies power to said computer and wherein a power output by said power means is controlled by audio commands.

10. The computer system and computer respectively according to any one of the preceding claims, **characterized by** having means whereby said user can by voice commands control the heat generated and power supplied to the processor and said display means.

11. The computer system and computer respectively according to any one of the preceding claims, **characterized in that** said display is a neck-hung display, a flat panel display, a display supported by a lanyard attached to a user's body, or a desk-supported display monitor.

12. The computer system and computer respectively according to any one of the preceding claims, **characterized in that** said communication means is selected from the group consisting of cellular phones, hard-wire telephones, radio transceivers, infrared, laser, fiber optics and other suitable communication means.

13. The computer system and computer respectively according to any one of the preceding claims, **characterized by** a desktop computer or a laptop computer comprising all of the components of a general purpose computer including a CPU and an audio transducer and converter means, said CPU containing an audio-recognizing means, said audio transducer and converter means in communication with said CPU for receiving audio commands from a user, said audio transducer and converter means having means for converting audio commands into electrical signals to control power in said computer, and having means to send said electrical signals to the CPU and other computer components and display to comply with said audio commands.

14. A core computer system comprising a unit that contains all of the components of a conventional computer within a completely sealed housing, said unit not capable of functioning as a computer unless it is positioned in contact with a compatible enclosure in said system, said enclosure determining the function of the combined unit-enclosure structure, said structure having means including audio commands to control the power and heat generated by said unit when in contact with said enclosure.

15. The core computer system according to claim 14, **characterized by** having means to convert verbal utterances to electrical signals to control power output and heat generated by said computer unit when in contact with said enclosure.

16. The core computer system according to claim 14 or 15, **characterized in that** a processor in said unit has means for processing user commands in accordance with a stored program.

17. The core computer system according to claims 14 to 16, **characterized by** comprising communication means including a mobile telephone.

18. The core computer system according to any of the claims 14 to 17, **characterized in that** a computer display means is in communication with a processor in said unit and wherein said display having means for displaying any power change effectuated by the audio commands of a user.

19. The core computer system according to any of the claims 14 to 18, **characterized in that** said display is selected from the group consisting of head-mounted displays, flat panel displays, neck-hung displays, wrist-mounted displays, arm-mounted displays, displays attached to said unit, displays attached to said enclosure, displays located apart from said unit and said enclosure and mixtures thereof.
